# EUROPEAN PATENT APPLICATION

(11) **EP 4 769 770 A1**
(43) Date of publication of application: **01.07.2026**
(21) Application number: 25790507.5
(22) Date of filing: 09.01.2025
(51) Int. Cl.: H01M 50/383, H01M 50/367, H01M 50/262, H01M 50/317, H01M 50/289, H01M 50/249, F16B 31/00, F16B 39/12

(54) **BATTERY PACK AND VEHICLE INCLUDING SAME**

(30) Priority: 16.04.2024 KR 20240050781
(71) Applicant: LG Energy Solution, Ltd., Seoul 07335 (KR)
(72) Inventor: HWANG, Tae-Won, Daejeon 34122 (KR); KANG, Jong-Mo, Daejeon 34122 (KR); MUN, Jeong-O, Daejeon 34122 (KR); PARK, Shin-Young, Daejeon 34122 (KR); SEO, Sung-Won, Daejeon 34122 (KR); LEE, Sang-Joon, Daejeon 34122 (KR)
(74) Representative: Hoffmann Eitle
(86) International application number: PCT/KR2025/000518
(87) International publication number: WO 2025/220846

(57) **Abstract**

Disclosed is a battery pack and a vehicle including the same. The battery pack includes a plurality of battery modules in which a plurality of battery cells are stacked; a pack case in which the plurality of battery modules are accommodated; and a fastening member configured to fasten the pack case, wherein at least a portion of the fastening member is coupled to the pack case and is broken when a pressure inside the pack case increases.

## Description

### TECHNICAL FIELD

This application is based on and claims priority from Korean Patent Application No. 10-2024-0050781, filed on April 16, 2024, with the Korean Intellectual Property Office, the disclosure of which is incorporated herein in its entirety by reference.

The present disclosure relates to a battery pack and a vehicle including the same, and more specifically, to a battery pack capable of evenly dispersing heat and smoothly discharging gas when a thermal event occurs, and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Various types of secondary batteries include a battery module that includes a module case capable of protecting battery cells and a plurality of battery cells stacked and inserted into the module case, and a battery pack that includes a plurality of battery modules.

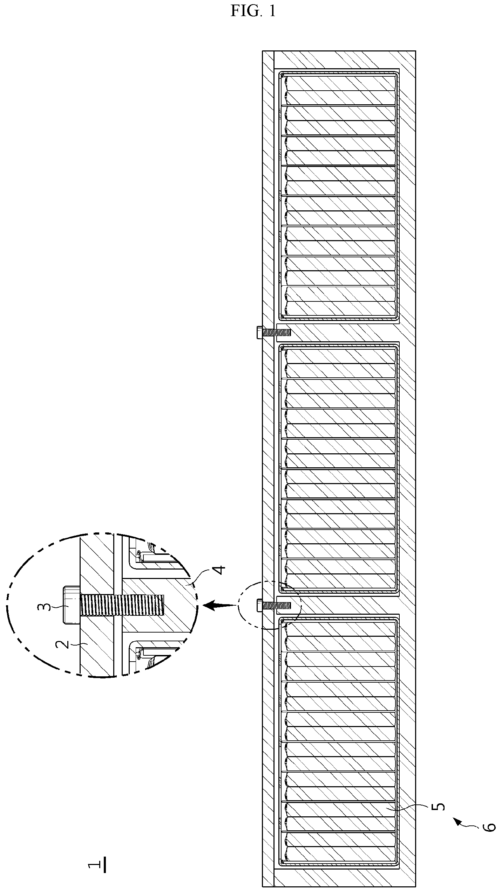

FIG. 1 is a cross-sectional view showing a conventional battery pack.

Referring to FIG. 1, in the conventional battery pack 1, the upper frame 2 is fixed to the barrier frame 4 by the bolt 3. That is, in the conventional battery pack 1, since the upper frame 2 is firmly fixed by the bolt 3, no free space or buffer space is formed through which heat or gas caused by the flame may move when a flame occurs.

In this state, if a flame occurs in the battery cell 5, the heat caused by the flame is blocked by the upper frame 2 not to spread, but is concentrated inside the battery module 6 where the flame occurs. In addition, since the gas generated inside the battery module 6 is not discharged, the internal pressure increases and the possibility of an explosion of the battery module 6 or the battery pack 1 increases.

At this time, if explosion occurs in the battery module 6 in which a flame is generated, flame may be propagated to another battery module 6 to cause a thermal runaway phenomenon, and if the flame leaks to the outside due to the thermal runaway phenomenon, there is a problem that the driver of the electric vehicle may be burned or put in a dangerous situation.

Alternatively, there is a problem in that the battery module 6 or the battery pack 1 is damaged or burned down by a chain reaction of flames caused by flame propagation, so it may be impossible to secure the stability of the battery module 6 or the battery pack 1.

### DISCLOSURE

### Technical Problem

The present disclosure is designed to solve the problems of the related art, and therefore the present disclosure is directed to providing a battery pack, which may prevent heat concentration by evenly dispersing the heat caused by the flame within the battery pack when a flame occurs in any one battery cell, thereby achieving uniform thermal distribution, and a vehicle including the same.

In addition, the present disclosure is directed to providing a battery pack in which venting is facilitated to easily discharge gas, and a vehicle including the same.

In addition, the present disclosure is directed to providing a battery module capable of preventing a thermal runaway phenomenon by preventing a flame chain reaction caused by flame propagation, and a battery pack and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery pack comprising: a plurality of battery modules in which a plurality of battery cells are stacked; a pack case in which the plurality of battery modules are accommodated; and a fastening member configured to fasten the pack case, wherein at least a portion of the fastening member is coupled to the pack case and is broken when a pressure inside the pack case increases.

In an embodiment, the fastening member may include a bolt and a first nut, and the first nut may be coupled to the pack case and may be broken by pressure.

In an embodiment, the pack case may include an upper frame; and a barrier frame fastened to the upper frame by the fastening member, and the first nut may be coupled to an upper side of the barrier frame.

In an embodiment, the fastening member may include a second nut coupled to the upper frame, and the bolt may be fastened to the first nut and the second nut, respectively.

In an embodiment, the second nut may be coupled to the upper frame by welding.

In an embodiment, the second nut may be separated from the first nut.

In an embodiment, the second nut may be in contact with the first nut or may be spaced apart therefrom by a preset interval.

In an embodiment, the bolt and the second nut may have greater rigidity than the first nut.

In an embodiment, materials of the bolt and the second nut may be different from a material of the first nut.

In an embodiment, the bolt and the second nut may be configured to maintain shapes thereof even when the pressure inside the pack case increases and the first nut is broken.

In an embodiment, the first nut may be coupled to the upper side of the barrier frame by an adhesive.

In an embodiment, when the pressure inside the pack case increases and the first nut is broken, the bolt may separate from the barrier frame so that the upper frame deforms upward, and a buffer space may be formed between the upper frame and the battery module.

In an embodiment, a venting portion may be formed in the pack case, and when the upper frame is deformed, gas generated from the battery cell may move to the venting portion.

In an embodiment, the venting portion may include a venting hole through which the gas generated from the battery cell is discharged; and a venting valve configured to close the venting hole and configured to be opened when an internal pressure of the pack case exceeds a preset value.

Meanwhile, according to another aspect of the present disclosure, there may be provided a vehicle including at least one battery pack described above.

### Advantageous Effects

The embodiments of the present disclosure have the effect of preventing heat concentration by evenly dispersing the heat caused by the flame within the battery pack when a flame occurs in any one battery cell, thereby achieving uniform thermal distribution.

In addition, the present disclosure has the effect of facilitating venting and allowing gas to be discharged easily.

In addition, the present disclosure has the effect of preventing a thermal runaway phenomenon by preventing flame chain reaction caused by flame propagation.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a cross-sectional view showing a conventional battery pack.
FIG. 2 is an exploded perspective view showing a battery pack according to an embodiment of the present disclosure.
FIG. 3 is a cross-sectional view showing a battery pack according to an embodiment of the present disclosure, in which a bolt is separated from a first nut fixed to a barrier frame and a second nut coupled to an upper frame.
FIG. 4 is a drawing showing that the bolt is coupled to the first nut and the second nut in FIG. 3.
FIG. 5 is a drawing showing that the bolt is separated from the first nut in FIG. 4 due to a breakage of the first nut by pressure.
FIG. 6 is a cross-sectional view showing a buffer space formed when the first nut is broken and the upper frame is deformed in the battery pack according to an embodiment of the present disclosure.
FIG. 7 is a perspective view showing only a portion of a battery pack according to a modified embodiment of the present disclosure.
FIG. 8 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

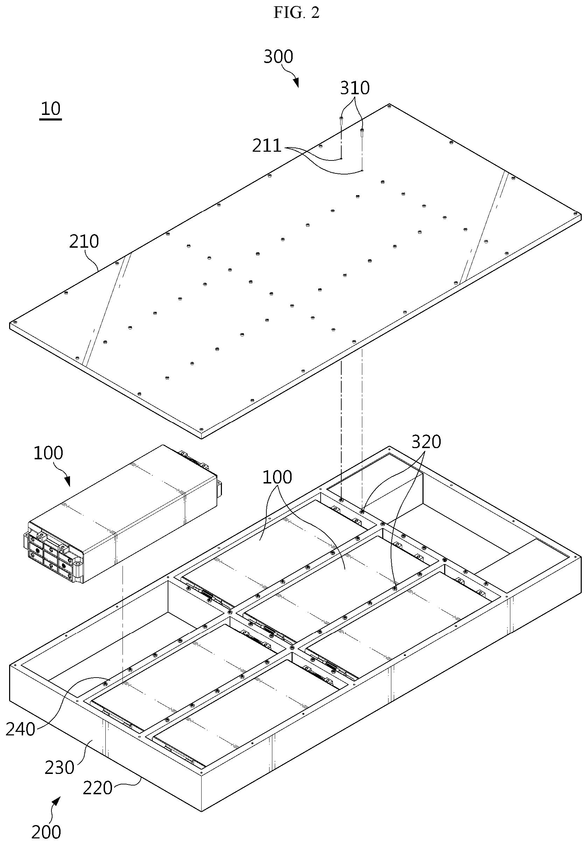

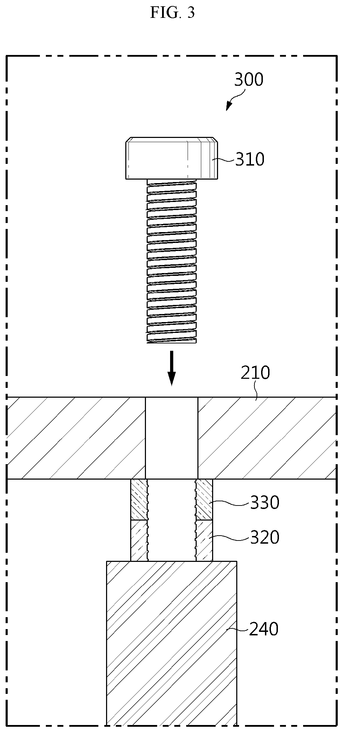

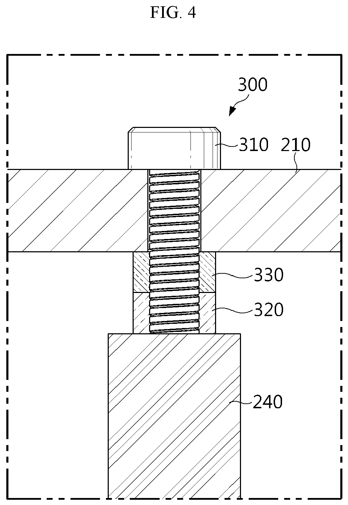

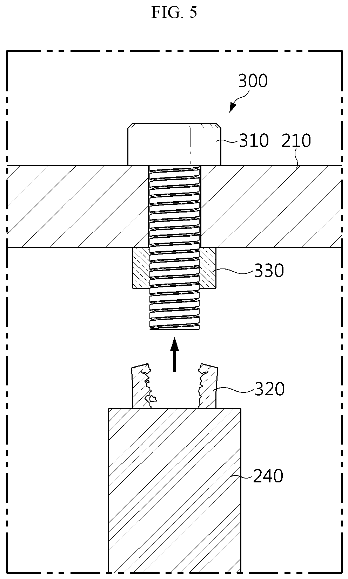

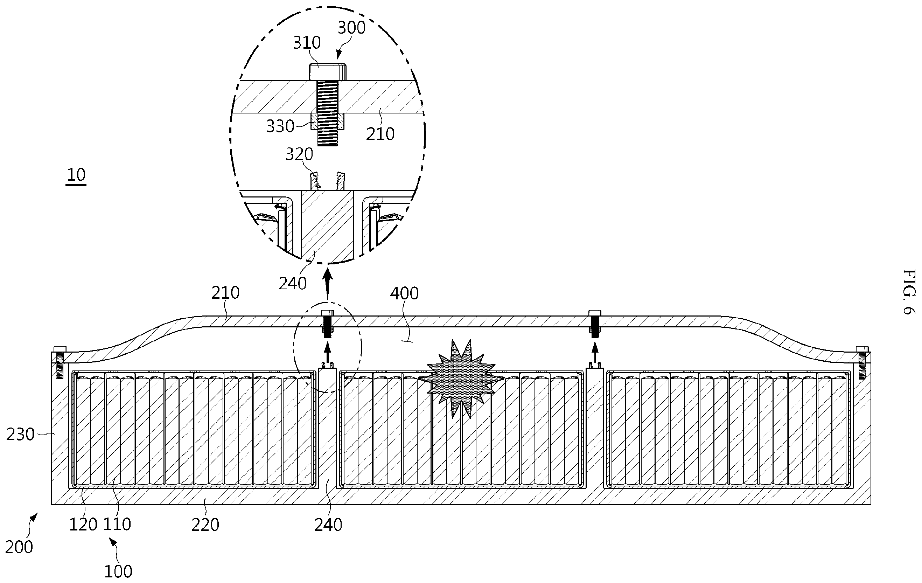

FIG. 2 is an exploded perspective view showing a battery pack according to an embodiment of the present disclosure, FIG. 3 is a cross-sectional view showing a battery pack according to an embodiment of the present disclosure, in which a bolt is separated from a first nut fixed to a barrier frame and a second nut coupled to an upper frame, FIG. 4 is a drawing showing that the bolt is coupled to the first nut and the second nut in FIG. 3, FIG. 5 is a drawing showing that the bolt is separated from the first nut in FIG. 4 due to a breakage of the first nut by pressure, and FIG. 6 is a cross-sectional view showing a buffer space formed when the first nut is broken and the upper frame is deformed in the battery pack according to an embodiment of the present disclosure.

Referring to FIG. 2, the battery pack 10 according to an embodiment of the present disclosure may include a plurality of battery modules 100, a pack case 200, and a fastening member 300.

The battery module 100 is accommodated in the pack case 200. Also, a plurality of battery cells 110 (see FIG. 6) are stacked in the battery module 100, and the battery module 100 may be provided in plurality, so that the plurality of battery modules 100 are arranged in various ways. For example, the battery modules 100 may be arranged in a horizontal direction and a vertical direction, but are not limited thereto.

Referring to FIG. 6, the battery module 100 may have a plurality of battery cells 110 and a module case 120.

The plurality of battery cells 110 may be stacked. The battery cells 110 may have various structures, and further, the plurality of battery cells 110 may be stacked in various ways.

The battery cell 110 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 110 may be equipped with an electrode lead. The electrode lead is a type of terminal that is exposed to the outside and connected to an external device, and a conductive material may be used. The electrode lead may include a positive electrode lead and a negative electrode lead.

The positive electrode lead and the negative electrode lead may be arranged in opposite directions with respect to the longitudinal direction of the battery cell 110, or the positive electrode lead and the negative electrode lead may be arranged in the same direction with respect to the longitudinal direction of the battery cell 110.

The battery cell 110 may be provided with a plurality of cartridges (not shown) that accommodate the battery cells 110. Each cartridge (not shown) may be manufactured by injection molding of plastic, and a plurality of cartridges (not shown) having an accommodation portion that accommodates the battery cells 110 may be stacked. A cartridge assembly in which a plurality of cartridges (not shown) are stacked may be provided with a connector element or a terminal element.

The connector element may include various types of electrical connection components or connecting members for connection to, for example, a BMS (Battery Management System, not shown) that may provide data on the voltage or temperature of the battery cell 110.

Also, the terminal element is a main terminal connected to the battery cell 110 and includes a positive electrode terminal and a negative electrode terminal. The terminal element is equipped with a terminal bolt so that the terminal element may be electrically connected to the outside. Meanwhile, the battery cell 110 may have various shapes.

The plurality of battery cells 110 are stacked and accommodated in the module case 120. The module case 120 surrounds the plurality of battery cells 110, thereby protecting the battery cells 110 from external vibrations or shocks.

The module case 120 may be formed in a shape corresponding to the shape of the stack in which a plurality of battery cells 110 are stacked. For example, if the stack in which a plurality of battery cells 110 are stacked is formed in a hexahedral shape, the module case 120 may also be formed in a hexahedral shape corresponding thereto. However, the present disclosure is not limited thereto. Here, the module case 120 may include an upper module case, a lower module case, and a side module case.

In addition, the module case 120 may be formed by, for example, bending a metal plate, whereby the module case 120 may be manufactured in an integral form. If the module case 120 is manufactured in an integral form, the coupling process may become easy and simple. Alternatively, the module case 120 may be provided in a separate form and coupled by welding, etc. However, the material of the module case 120 is not limited to a metal material.

Referring to FIG. 2, a plurality of battery modules 100 are accommodated in the pack case 200. The pack case 200 may include, for example, an upper frame 210, a lower frame 220, a side frame 230, and a barrier frame 240.

Referring to FIGS. 2 and 6, the upper frame 210 is coupled to the side frame 230 and the barrier frame 240. Here, the barrier frame 240 is fastened by a fastening member 300 configured to be broken when the pressure inside the pack case 200 increases.

For example, the fastening member 300 may include a bolt 310 and a first nut 320. Here, the first nut 320 may be configured to be broken when the pressure inside the pack case 200 increases. Also, the first nut 320 may be coupled to the barrier frame 240. In addition, the bolt 310 is coupled to the first nut 320.

That is, referring to FIG. 4, the inner side of the upper frame 210 may be coupled to the barrier frame 240 by the fastening member 300, for example the bolt 310 and the first nut 320. In addition, the upper frame 210 is also fixed to the side frame 230 by the bolt 310.

In addition, if a thermal event occurs in the battery cell 110, etc., the upper frame 210 is still fixed to the side frame 230 by the bolt 310, but the first nut 320 of the fastening member 300 that fastens the barrier frame 240 is broken when the pressure inside the pack case 200 increases, so the upper frame 210 is separated from the barrier frame 240.

Therefore, in a thermal event situation, the upper frame 210 is separated from the barrier frame 240 (see FIG. 6), so that a buffer space 400 may be formed between the upper frame 210 and the barrier frame 240. This will be described in detail later.

The lower frame 220 is configured such that the plurality of battery modules 100 are placed thereon. The lower frame 220 may be formed in a rectangular plate shape, but is not limited thereto. The lower frame 220 forms the bottom of the pack case 200.

The side frame 230 may be configured to extend upward from an edge of the lower frame 220. The side frame 230 defines the height of the pack case 200 and forms a preset space between the side frame 230 and the lower frame 220.

In addition, the plurality of battery modules 100 are placed in the space between the side frame 230 and the lower frame 220. The side frame 230 may include a long side frame 230 with a relatively long length and a short side frame 230 with a relatively short length. Alternatively, the lengths of the side frames 230 may all be the same.

The barrier frame 240 extends upward within the lower frame 220 and is coupled to the side frame 230. One or more barrier frames 240 may be provided, and the battery module 100 may be arranged between the plurality of barrier frames 240 or between the barrier frame 240 and the side frame 230. Here, the barrier frame 240 may be arranged in a horizontal or vertical direction within the side frame 230.

The barrier frame 240 may be coupled to the inner side of the upper frame 210 by the fastening member 300, for example the bolt 310 and the first nut 320.

The fastening member 300 is configured to fasten the pack case 200, for example, to fasten the upper frame 210 and the barrier frame 240 of the pack case 200. Here, at least a portion of the fastening member 300, for example the first nut 320, is coupled to the pack case 200 and is configured to be broken when the pressure inside the pack case 200 increases.

In addition, at least a portion of the fastening member 300 is fixed to the pack case 200. Referring to FIG. 3, for example, the fastening member 300 may include a bolt 310 and a first nut 320, and the first nut 320 may be coupled to the pack case 200 and configured to be broken by pressure. That is, in the battery pack 10 according to an embodiment of the present disclosure, the first nut 320 is configured to be broken when the internal pressure of the pack case 200 increases.

Also, as in FIG. 3, for example, the first nut 320 may be coupled to the upper side of the barrier frame 240 of the pack case 200.

In addition, as described above, the first nut 320 configured to be broken by pressure increase and the bolt 310 fastened to the first nut 320 fasten the upper frame 210 and the barrier frame 240.

Referring to FIGS. 3 and 4, the first nut 320 may be coupled to the upper side of the barrier frame 240 in various ways. If the first nut 320 is made of a weldable material, the first nut 320 may be coupled to the barrier frame 240 by welding. Alternatively, if the first nut 320 is made of a non-weldable material, such as plastic, the first nut 320 may be coupled to the upper side of the barrier frame 240 by an adhesive.

Referring to FIGS. 3 to 5, the fastening member 300 may include a second nut 330 coupled to the upper frame 210, and in this case, the bolt 310 is fastened to the first nut 320 and the second nut 330, respectively.

As described above, the second nut 330 is coupled to the upper frame 210. Here, the second nut 330 is coupled to the upper frame 210 in various ways, for example by welding, but is not limited thereto.

In FIG. 4, the second nut 330 is only in contact with the first nut 320, and they are not coupled to each other, and the second nut 330 is separated from the first nut 320. In addition, in FIG. 4, the second nut 330 and the first nut 320 are in contact with each other, but the second nut 330 and the first nut 320 may also be spaced apart by a preset interval.

Referring to FIG. 4, the bolt 310 is coupled to the first nut 320 coupled to the upper frame 210 to fasten the upper frame 210 and the barrier frame 240 for the first time, and further, the bolt 310 is coupled to the second nut 330 to fasten the upper frame 210 and the barrier frame 240 for the second time.

Here, when a thermal event occurs in the battery cell 110, etc., the first nut 320 is broken by the pressure. Also, as shown in FIG. 5, if the first nut 320 fastened to the bolt 310 is broken, the bolt 310 is separated from the first nut 320, and the upper frame 210 is also separated from the barrier frame 240 together with the bolt 310.

Referring to FIG. 6, if a flame occurs in the battery cell 110 and the pressure inside the pack case 200 increases so that the first nut 320 is broken, the bolt 310 is separated from the barrier frame 240 so that the upper frame 210 is deformed upward, and accordingly, a buffer space 400 is formed between the upper frame 210 and the battery module 100.

That is, the upper frame 210 is deformed upward by the flame and gas generated from the battery cell 110, thereby forming a buffer space 400, and the heat from the flame spreads to other battery modules 100 through the buffer space 400, thereby achieving an overall uniform thermal distribution and preventing the heat from being concentrated in any one battery module 100.

Here, the bolt 310 and the second nut 330 may be configured to have greater rigidity than the first nut 320. That is, the rigidity of the bolt 310 may be greater than the rigidity of the first nut 320, and also, the rigidity of the second nut 330 may be greater than the rigidity of the first nut 320.

For this purpose, the bolt 310 and the second nut 330 may be made of different materials from the first nut 320. For example, the bolt 310 and the second nut 330 may be made of metal, while the first nut 320 may be made of plastic. However, the materials of the bolt 310, the first nut 320, and the second nut 330 are not limited thereto.

In this way, if the rigidity of the bolt 310 and the second nut 330 is greater than the rigidity of the first nut 320, even if the pressure inside the pack case 200 increases and the first nut 320 is broken, the bolt 310 and the second nut 330 may maintain their shape without being damaged.

In addition, even if a thermal event occurs, if the bolt 310 and the second nut 330 maintain their original shapes, the fastening hole 211 (see FIG. 2) of the upper frame 210 through which the bolt 310 passes is blocked by the bolt 310 and the second nut 330, so that the inflow of oxygen through the fastening hole 211 is blocked, and also, the flame eruption from the inside is blocked, so that there is an effect of preventing flame propagation.

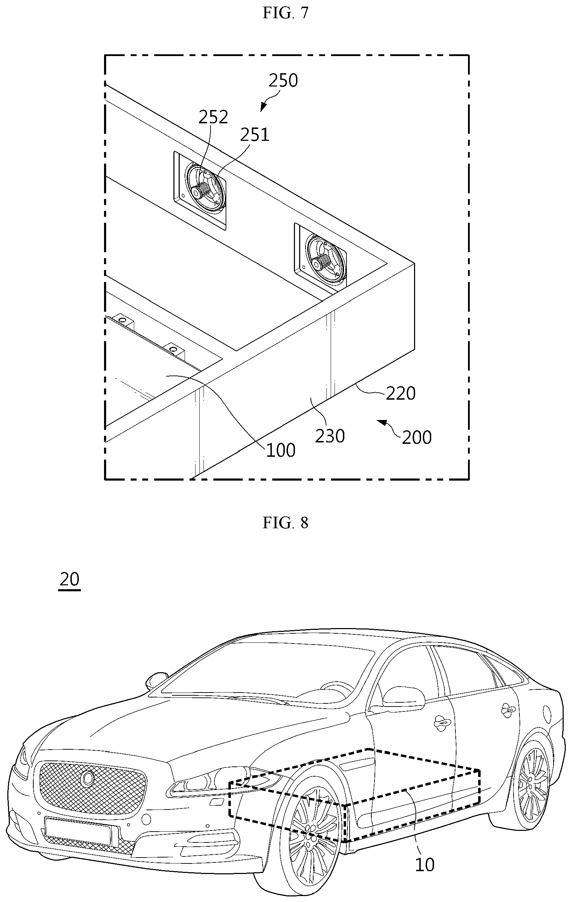

FIG. 7 is a perspective view showing only a portion of a battery pack according to a modified embodiment of the present disclosure.

Referring to FIG. 7, this embodiment is different from the former embodiment in that a venting portion 250 is formed in the pack case 200. However, the features of the modified embodiments, which are common to the former embodiment, will not be described in detail again. In addition, the features of the modified embodiments, which are applicable to the former embodiment, may be applied to the former embodiment.

Referring to FIG. 7, a venting portion 250 is formed in the pack case 200. As described above, if the internal pressure of the pack case 200 increases so that the first nut 320 is broken and the upper frame 210 is deformed, the gas generated from the battery cell 110 may move to the venting portion 250 and be discharged.

Here, the venting portion 250 may include a venting hole 251 and a venting valve 252. The venting hole 251 is a hole through which the gas generated from the battery cell 110 is discharged, and may be formed in the pack case 200, for example, the side frame 230, but is not limited thereto.

In addition, the venting valve 252 may be installed in the venting hole 251. The venting valve 252 may be configured in various ways. For example, the venting valve 252 may be configured to close the venting hole 251 and be opened when the internal pressure of the pack case 200 exceeds a preset value.

That is, the venting valve 252 normally blocks the venting hole 251, but when the gas leaks from the battery cell 110 and the internal pressure of the pack case 200 exceeds the preset value or range, the venting valve 252 opens and the gas is discharged from the pack case 200 through the venting hole 251.

As described above, if the upper frame 210 is deformed upward by the flame and gas generated from the battery cell 110 to form the buffer space 400, the gas moves along the buffer space 400 to the venting portion 250, and as the venting valve 252 is opened by the pressure of the gas, the gas may be discharged to the outside of the pack case 200.

That is, the venting is facilitated by the buffer space 400 formed by the deformation of the upper frame 210, thereby allowing gas to be discharged easily.

In addition, as described above, as the heat spreads to other battery modules 100 through the buffer space 400, concentration of heat in any one battery module 100 is prevented, thereby achieving a uniform thermal distribution.

Also, since the gas is discharged smoothly by the buffer space 400 formed between the upper frame 210 and the battery module 100, ultimately, the chain reaction of flame due to flame propagation is prevented, thereby preventing the thermal runaway phenomenon.

FIG. 8 is a drawing for illustrating a vehicle including the battery pack according to each embodiment of the present disclosure.

Referring to FIG. 8, the vehicle 20 according to an embodiment of the present disclosure may include one or more battery packs 10 according to each of the embodiments described above. Here, the vehicle 20 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack and a vehicle including the same, and is particularly applicable to industries related to secondary batteries.

## Claims

1. A battery pack comprising:
a plurality of battery modules in which a plurality of battery cells are stacked;
a pack case in which the plurality of battery modules are accommodated; and
a fastening member configured to fasten the pack case,
wherein at least a portion of the fastening member is coupled to the pack case and is broken when a pressure inside the pack case increases.

2. The battery pack according to claim 1,
wherein the fastening member includes a bolt and a first nut, and
wherein the first nut is coupled to the pack case and is broken by pressure.

3. The battery pack according to claim 2,
wherein the pack case includes:
an upper frame; and
a barrier frame fastened to the upper frame by the fastening member,
wherein the first nut is coupled to an upper side of the barrier frame.

4. The battery pack according to claim 3,
wherein the fastening member includes a second nut coupled to the upper frame, and
wherein the bolt is fastened to the first nut and the second nut, respectively.

5. The battery pack according to claim 4,
wherein the second nut is coupled to the upper frame by welding.

6. The battery pack according to claim 4,
wherein the second nut is separated from the first nut.

7. The battery pack according to claim 6,
wherein the second nut is in contact with the first nut or is spaced apart therefrom by a preset interval.

8. The battery pack according to claim 4,
wherein the bolt and the second nut have greater rigidity than the first nut.

9. The battery pack according to claim 4,
wherein materials of the bolt and the second nut are different from a material of the first nut.

10. The battery pack according to claim 4,
wherein the bolt and the second nut are configured to maintain shapes thereof even when the pressure inside the pack case increases and the first nut is broken.

11. The battery pack according to claim 3,
wherein the first nut is coupled to the upper side of the barrier frame by an adhesive.

12. The battery pack according to claim 3,
wherein when the pressure inside the pack case increases and the first nut is broken, the bolt separates from the barrier frame so that the upper frame deforms upward, and a buffer space is formed between the upper frame and the battery module.

13. The battery pack according to claim 3,
wherein a venting portion is formed in the pack case, and
wherein when the upper frame is deformed, gas generated from the battery cell moves to the venting portion.

14. The battery pack according to claim 13,
wherein the venting portion includes:
a venting hole through which the gas generated from the battery cell is discharged; and
a venting valve configured to close the venting hole and configured to be opened when an internal pressure of the pack case exceeds a preset value.

15. A vehicle comprising the battery pack according to any one of claims 1 to 14.
